# EUROPEAN PATENT SPECIFICATION

(11) **EP 2 606 289 B1**
(45) Date of publication and mention of the grant of the patent: **04.05.2016**
(21) Application number: 11811545.0
(22) Date of filing: 23.12.2011
(51) Int. Cl.: F24J 2/07, F24J 2/24, F24J 2/48

(54) **HEAT RECEIVER TUBE, METHOD FOR MANUFACTURING THE HEAT RECEIVER TUBE, PARABOLIC TROUGH COLLECTOR WITH THE RECEIVER TUBE AND USE OF THE PARABOLIC TROUGH COLLECTOR**
WÄRMEEMPFÄNGERROHR, VERFAHREN ZUR HERSTELLUNG DES WÄRMEEMPFÄNGERROHRS, PARABOLRINNENKOLLEKTOR MIT DEM EMPFÄNGERROHR UND VERWENDUNG DES PARABOLRINNENKOLLEKTORS
TUBE RÉCEPTEUR DE CHALEUR, PROCÉDÉ DE FABRICATION DU TUBE RÉCEPTEUR DE CHALEUR, COLLECTEUR EN AUGET PARABOLIQUE ÉQUIPÉ DU TUBE RÉCEPTEUR, ET UTILISATION DU COLLECTEUR EN AUGET PARABOLIQUE

(30) Priority: 17.01.2011 WO PCT/EP2011/050536
(43) Date of publication of application: 26.06.2013
(73) Proprietor: Siemens Concentrated Solar Power Ltd., 99107 Beit Shemesh (Industrial Area West) (IL)
(72) Inventor: BARKAI, Menashe, 69440 Tel Aviv (IL); EZER, Rami, 52383 Ramat Gan (IL); LIPMAN, Eli, 75321 Rishon LeZion (IL); SHWARZMAN, Joel, 60850 Shoham (IL)
(74) Representative: Maier, Daniel Oliver
(86) International application number: PCT/EP2011/073918
(87) International publication number: WO 2012/097942

(56) References cited:
- EP-A1- 2 253 737
- WO-A1-2006/015815
- US-A1- 2010 258 111

## Description

### BACKGROUND OF THE INVENTION

### 1. Field of the Invention

This invention relates to a heat receiver and a method for manufacturing the heat receiver tube. More over a parabolic trough collector and a use of the parabolic trough collector are provided.

### 2. Description of the Related Art

A sun energy collecting unit of a sun field power plant based on the concentrated solar power technique is for instance a parabolic trough collector with parabolic mirrors and a heat receiver tube. The heat receiver tube is arranged in a focal line of the mirrors. By sunlight reflecting surfaces of the mirrors the sunlight is focused to the heat receiver tube, which is filled with a heat transfer fluid, e.g. a thermo-oil or molten salt. Via the heat receiver tube the energy of the sunlight is coupled into the heat transfer fluid. Solar energy is converted to thermal energy.

In order to maximize an efficiency, with which the energy of the sunlight is coupled into the heat transfer fluid, a solar energy absorptive coating is attached on a surface of the heat receiver tube. Such an absorptive coating commonly comprises a multilayer stack with sequentially deposited thin film layers having different optical characteristics.

An essential overall optical characteristic of the absorptive coating is a high solar absorbance (low solar reflectivity) for wavelengths of solar spectrum (absorption radiation). Additionally a low emissivity (high reflectivity) for infrared radiation is essential. Such a coating is called selective solar coating.

The document US 2010/0258111 A1 focuses on a high absorbance. For that, a coating with carbo-nanotubes (CNTs) is used.

In contrast to that, WO 2006/015815 A1 describes receiver tube with different surfaces. Thereby the optical characteristics of the selective coatings of partial surfaces of the receiver tube vary: The selective coating of the receiver tube which faces the parabolic mirror comprises a relatively high solar absorbance whereas the selective coating of the receiver tube which is averted to the parabolic mirror comprises a relatively low emissivity.

For the manufacturing of the heat receiver tube the solar absorptive coating is attached on the surface of the heat receiver tube by a sequential profile of thin films deposition on the surface using a method like sputtering.

### SUMMARY OF THE INVENTION

It is an object of the invention to provide a heat receiver tube with an energy yield which is improved in comparison to the state of the art.

It is another object of the invention to provide a parabolic trough collector with the heat receiver tube.

A further object of the invention is to provide a use of the parabolic trough collector.

These objects are achieved by the inventions specified in the independent claims, 1, 10 and 15 and in the dependent claim 14.

A heat receiver tube for absorbing solar energy and for transferring absorbed solar energy to a heat transfer fluid which can be located inside a core tube of the heat receiver tube is provided. The core tube comprises at least one first partial core tube surface covered by at least one first solar energy absorptive coating for absorbing a first absorption radiation of a first certain spectrum of the sunlight. The core tube comprises additionally at least one second partial core tube surface covered by at least one second solar energy absorptive coating for absorbing a second absorption radiation of a second certain spectrum of the sunlight. The heat receiver tube is characterized in that an emission radiation inhibiting coating for inhibiting an emissivity for infrared radiation is deposited on the second solar energy absorptive coating such that the second solar energy absorptive coating is arranged between the second partial core tube surface and the emission radiation inhibiting coating. The first solar energy absorptive coating forms a first partial heat receiver tube surface of the heat receiver tube and the emission radiation inhibiting coating forms a second partial heat receiver tube surface of the heat receiver tube. The radiation inhibiting coating is preferably directly attached to the second solar energy absorptive coating leading to a layer stack arranged on the second partial core tube surface of the core tube. This layer stack consists of the second solar energy absorptive coating and the emission radiation inhibiting coating.

For instance, the first partial surface is formed by a first segment with a first circumference (segment angle) between 90 and 270° whereas the second partial surface is formed by a second segment with a second circumference between 180° and 90°.

Additionally a method for manufacturing a heat receiver tube according is disclosed. The method comprises following steps:
a) Providing an uncovered core tube for a heat receiver tube with the first partial core tube surface and the second partial core tube surface;
b) Attaching a first solar energy absorptive coating on the first partial core tube surface and attaching a second solar energy absorptive coating on the second partial core tube surface; and
c) Attaching an emission radiation inhibiting coating on the second solar absorptive coating such that the second selective solar energy coating is arranged between the second partial core tube surface and the emission radiation inhibiting coating.

Also provided is a parabolic trough collector comprising at least one parabolic mirror having a sunlight reflecting surface for concentrating sunlight in a focal line of the parabolic mirror and at least one heat receiver tube which is arranged in the focal line of the parabolic mirror. The heat receiver tube is arranged in the focal line such that the first partial heat receiver tube surface with the first solar absorptive coating is at least partially located opposite to the sunlight reflecting surface and the second partial heat receiver tube surface with the emission radiation inhibiting coating is at least partially averted to the sunlight reflecting surface.

Finally a use of the parabolic trough collector in a power plant for converting solar energy into electrical energy is disclosed.

Preferably the first solar energy absorptive coating and the second solar energy absorptive coating form a common solar energy absorptive coating with common physical and chemical characteristics. There is just one kind of solar energy absorptive coating attached to the lateral area of the core tube. This common solar energy absorptive coating has all over identical chemical and physical characteristics. As a consequence the first absorption radiation of the first the first certain spectrum of the sunlight and the second absorption radiation of the second certain spectrum of the sunlight are nearly identical. The use of just one kind of solar absorptive coating is advantageous as to the manufacturing of heat receiver tube. It is easier to deposit just one kind of solar energy absorptive coating on the overall core tube surface of the core tube.

The concept of the invention is to optimize thermal characteristics of the heat receiver tube by maximizing a coupling of the solar energy (concentrated radiation energy) into the heat receiver tube via the first partial heat receiver tube surface and by minimizing a loss of thermal energy via the second partial heat receiver tube surface. The first solar energy absorptive coating forming the first partial heat receiver tube surface is designed to absorb solar radiation as much as possible (absorbance more than 97%). In contrast to that the emissivity via the second partial heat receiver tube is reduced. The heat receiver tube can be arranged in the focal line of a parabolic mirror such that concentrated solar radiation impinges the first solar absorptive coating of the first partial heat receiver tube surface. The part of the heat receiver tube which is not heated by concentrated solar radiation (i.e. that part which typically faces the sun and is thus subject only to direct solar radiation) is coated by the emission radiation inhibiting coating. The emission radiation inhibiting coating is a non-selective coating.

Preferably the first partial surface and/or the second partial surface are aligned along a longitudinal alignment of the heat receiver tube. This characteristic is applied to the first core tube surfaces and/or the second core tube surface, too. The alignment along the longitudinal alignment of the heat receiver tube and the alignment along the longitudinal alignment the core tube, respectively, is advantageous as to an arrangement of the heat receiver tube in the focal line of the parabolic mirror. The coupling of the concentrated radiation energy of the sun into the heart receiver tube is maximized and the loss of thermal energy of the heat receiver tube is minimized.

In a preferred embodiment the first partial heat receiver tube surface comprises a first segment of a lateral area of the heat receiver tube with a first circumference which is selected from the range between 50° and 300° and preferably between 60° and 210°. In a further preferred embodiment the second partial heat receiver tube surface comprises a second segment of the lateral area of the heat receiver tube with a second circumference which is selected from the range between 210° and 60° and preferably between 180° and 90°. These angles are optimized concerning a collector geometry (e.g. RIM angle).

The emission radiation inhibiting coating is deposited on the second partial heat energy absorptive coating. By the emission radiation inhibiting coating a magnitude of the emissivity of infrared radiation is reduced. The emissivity for infrared radiation of the radiation inhibiting coating is less than 30%. Preferably the emission radiation inhibiting coating comprises an emissivity for infrared radiation which is less than 20%.

In a preferred embodiment the emission radiation inhibiting coating comprises a metal which is selected from the group existing of Aluminum, Copper, Silver, Gold and Molybdenum. Other metals or alloys are possible, too. The emission radiation inhibiting coating can be metallic and therefore substantially just consist of a metal. For instance, the emission radiation inhibiting coating is a layer consisting of Copper. Such a coating with Copper blocks a heat radiation (emissivity) on the "upper" part of the heat receiver tube which is impinged upon by direct solar radiation. This strongly reduces the overall heat loss of the heat receiver tube while losing some of the total radiation impinging thereupon.

In a further preferred embodiment the emission radiation inhibiting coating comprises a layer thickness which is selected from the range between 100 nm and 800 nm and preferably 200 nm and 800 nm. Most preferably the thickness is selected from the range between 300 nm and 800 nm. For instance, the emission radiation inhibiting coating comprises a layer thickness of about 500 nm.

Preferably at least one of the partial heat receiver tube surfaces forms a contiguous area. The heat receiver tube is arranged in the focal line in parallel to the longitudinal alignment of the mirror. By this the absorption of solar energy is very efficiently. Concentrated solar radiation impinges always the solar absorptive coating of the first partial heat receiver tube surface (intensity about 52 suns) whereas the second partial heat receiver tube surface is not impinged by the concentrated solar radiation (intensity about 0.6 suns). Very small amount of energy could be wasted while gaining much more in heat losses due to overall emissivity.

The overall ratio of absorption to emissivity of the heat receiver tube is therefore increased even if some of the direct sun radiation is lost. The areas of the first partial heat receiver tube surface and the second partial heat receiver tube surface don't have to have the same extent. The extents of the partial heat receiver tube surfaces are easily optimized as well as their location on the lateral surface of the heat receiver tube (e.g. due to RIM).

In order to improve the physical and chemical stability and the thermal characteristics of the heat receiver tube some other measures are additionally implemented. For instance, the heat receiver tube has an encapsulation which comprises at least one encapsulation wall. This encapsulation wall is at least partially transparent for the first absorption radiation and/or for the second absorption radiation. At least partially transparent is given in the case that a transmission for the absorption radiations is more than 80% and preferably more than 90%.

The encapsulation is preferably a glass tube and the encapsulation wall is a glass tube wall. Between the heat receiver surface and the encapsulation wall there is a receiver gap. This receiver gap is evacuated. This means that a gas pressure in the receiver gab is less than 10⁻² mbar and preferably less than 10⁻³ mbar. This has the advantage that a thermal heat transfer away from the heat receiver tube with the heat transfer fluid by convection is reduced. The thermal energy doesn't dissipate and is substantially completely available for the heating of the heat transfer fluid.

For the attaching of at least one of the solar energy absorptive coatings and/or for the attaching of the emission radiation inhibiting coating a thin film deposition technique is used. The thin film deposition technique is preferably selected from the group consisting of atomic layer deposition, chemical vapor deposition and physical vapor deposition. The physical vapor deposition is for instance sputtering.

In order to get structured layers structuring deposition techniques are used. Alternatively a layer can be deposited unstructured and after the deposition a structuring is carried out, e.g. by removing deposited material. In a preferred embodiment the attaching of at least one of the solar energy absorptive coatings and/or the attaching of the emission radiation inhibiting coating are carried out with the aid of a mask method. Preferably the first solar energy absorptive coating and the second solar energy absorptive coating form a common, contiguous, the complete core tube covering layer. In this situation the use of a mask method is not necessary.

Following advantages are connected to the invention:
- A wider range of available materials is accessible for the second partial heat receiver tube surface of the heat receiver tube.
- A higher blockage of heat radiation at the non-selective coated part results due to better fitted materials.
- This results in an overall higher ratio of absorption to emissivity of the complete heat receiver tube.

### BIEF DESCRIPTION OF THE DRAWINGS

Further features and advantages of the invention are produced from the description of exemplary embodiments with reference to the drawing. The drawings are schematic.

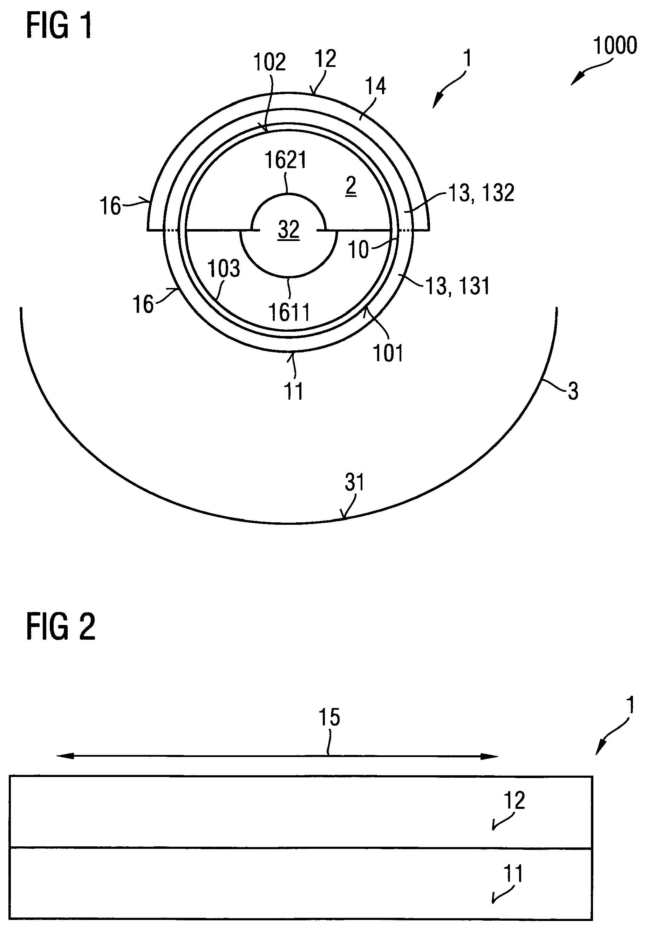

Figure 1 shows a cross section of a heat receiver tube and a parabolic through collector with the heat receiver tube.
Figure 2 shows the heat receiver tube on a side.

### DETAILED DESCRIPTION OF THE INVENTION

Given is a heat receiver tube 1 for absorbing solar energy and for transferring absorbed solar energy to a heat transfer fluid 2 which can be located inside a core tube 10 of the heat receiver tube. The core tube consists of a core tube wall 103 with steel.

The core tube 10 comprises a first partial core tube surface 101 which is covered by a first solar energy absorptive coating (selective coating) 131 for absorbing a first absorption radiation of a first certain spectrum of the sunlight. The first solar energy absorptive coating is a multilayer arrangement with different layers with different optical characteristics.

A second partial core tube surface 102 is covered by a second solar energy absorptive coating 132 for absorbing a second absorption radiation of a second certain spectrum of the sunlight. The physical and chemical characteristics of the first solar energy absorptive coating and the second solar energy absorptive coating are the same. The first solar energy absorptive coating 131 and the solar energy absorptive coating form a common contiguous solar absorptive coating 13 which is deposited all over the latent area of the core tube surface of the core tube.

An emission radiation inhibiting coating 14 for inhibiting an emissivity for infrared radiation is deposited on the second selective solar energy coating 132 such that the second selective solar energy coating 132 is arranged between the second partial core tube surface 102 and the emission radiation inhibiting coating 14. The emission radiation inhibiting coating consists of Copper. Alternatively the used metal is Aluminum. The emission radiation inhibiting coating comprises a layer thickness of about 500 nm.

The first solar energy absorptive coating 131 forms a first partial heat receiver tube surface 11 of the heat receiver tube 1. The emission radiation inhibiting coating 14 forms a second partial heat receiver tube surface 12 of the heat receiver tube 1. These partial receiver tube surfaces are aligned along a longitudinal alignment 15 of the heat receiver tube 1.

The first partial heat receiver tube surface 11 forms a first segment of the lateral area 16 of the heat receiver tube 1 with a first circumference 1611 of about 180°. The second partial heat receiver tube surface 12 forms a second segment of the lateral area 16 of the heat receiver tube 1 with a second circumference 1612 of about 180°.

In the figures not shown are following additional structural measures: The heat receiver tube is enveloped in a glass tube with a glass tube wall. The glass tube wall is transparent for the absorption radiations with a transmission of more than 90%. Between the glass tube wall and the receiver surface 16 a receiver gap is located. This receiver gap is evacuated. A gas pressure is about 10⁻³ mbar.

The heat receiver tube 1 is part of a parabolic trough collector 1000. The parabolic trough collector 1000 comprises at least one parabolic mirror 3 with a sunlight reflective surface 31. By the reflective surface 31 sunlight is concentrated in the focal line 32 of the parabolic mirror 3.

The heat receiver tube 1 is located in the focal line 32 of the parabolic mirror 3. Thereby the first partial heat receiver tube surface 11 of the heat receiver tube ("lower" part of the receiver tube 1) is arranged opposite to the sunlight reflective surface 31 of the mirror 3. The second partial heat receiver tube surface 12 ("upper" part of the heat receiver tube 1) is averted to the sunlight reflective surface 31 of the mirror 3.

Inside the heat receiver tube a heat transfer fluid 2 is located. By the solar energy absorptive coating sunlight is absorbed and transferred into heat. This heat is transferred to the heat transfer fluid.

The parabolic trough collector is used in a solar power plant for converting solar energy into electrical energy.

## Claims

1. Heat receiver tube (1) for absorbing solar energy and for transferring absorbed solar energy to a heat transfer fluid (2) which can be located inside a core tube (10) of the heat receiver tube (1), wherein
- the core tube (10) comprises at least one first partial core tube surface (101) covered by at least one first solar energy absorptive coating (131) for absorbing a first absorption radiation of a first certain spectrum of the sunlight; and at least one second partial core tube surface (102) covered by at least one second solar energy absorptive coating (132) for absorbing a second absorption radiation of a second certain spectrum of the sunlight;
- the first solar energy absorptive coating (131) forms a first partial heat receiver tube surface (11) of the heat receiver tube (1);
**characterized in that**
- an emission radiation inhibiting coating (14) for inhibiting an emissivity for infrared radiation is deposited on the second solar energy absorptive coating (132) such that the second solar energy absorptive coating (132) is arranged between the second partial core tube surface (102) and the emission radiation inhibiting coating (14);
and
- the emission radiation inhibiting coating (14) forms a second partial heat receiver tube surface (12) of the heat receiver tube (1).

2. Heat receiver tube according to claim 1, wherein the first solar energy absorptive coating (131) and the second solar energy absorptive coating (132) form a common solar energy absorptive coating (13) with common physical and chemical characteristics.

3. Heat receiver tube according to claim 1 or claim 2, wherein the first partial heat receiver tube surface (11) and/or the second partial heat receiver tube surface (12) are aligned along a longitudinal alignment (15) of the heat receiver tube (1).

4. Heat receiver tube according to one of the previous claims, wherein the first partial heat receiver tube surface (11) comprises a first segment of a lateral area (16) of the heat receiver tube (1) with a first circumference (1611) which is selected from the range between 50° and 300° and preferably between 60° and 210°.

5. Heat receiver tube according to one of the previous claims, wherein the second partial heat receiver tube surface (12) comprises a second segment of the lateral area (16) of the heat receiver tube (1) with a second circumference (1621) which is selected from the range between 210° and 60° and preferably between 180° and 90°.

6. Heat receiver tube according to one of the previous claims, wherein the emission radiation inhibiting coating (14) comprises an emissivity for infrared radiation which is less than 20%.

7. Heat receiver tube according to one of the previous claims, wherein the emission radiation inhibiting coating (14) comprises a metal which is selected from the group existing of Aluminum, Copper, Silver, Gold and Molybdenum.

8. Heat receiver tube according to one of the previous claims, wherein the emission radiation inhibiting coating (14) comprises a layer thickness which is selected from the range between 100 nm and 800 nm and preferably between 200 nm and 800 nm.

9. Heat receiver tube according to one of the previous claims, wherein at least one of the partial heat receiver tube surfaces (11, 12) forms a contiguous area.

10. Method for manufacturing a heat receiver tube according to one of the claims 1 to 9, the method comprising following steps:
a) Providing an uncovered core tube (10) for a heat receiver tube (1) with the first partial core tube surface (101) and the second partial core tube surface (102);
b) Attaching a first solar energy absorptive coating (131) on the first partial core tube surface (11) and attaching a second solar energy absorptive coating (132) on the second partial core tube surface (12); and
c) Attaching an emission radiation inhibiting coating (14) on the second solar absorptive coating (132) such that the second selective solar energy coating (132) is arranged between the second partial core tube surface (102) and the emission radiation inhibiting coating (14).

11. Method according to claim 10, wherein for the attaching of at least one of the solar energy absorptive coatings (13, 131, 132) and/or for the attaching of the emission radiation inhibiting coating (14) a thin film deposition technique is used.

12. Method according to claim 11, wherein the thin film deposition technique is selected from the group consisting of atomic layer deposition, chemical vapor deposition and physical vapor deposition.

13. Method according to one of the claims 9 to 12, wherein the attaching of at least one of the solar energy absorptive coatings (13, 131, 132) and/or for the attaching of the emission radiation inhibiting coating (14) are carried out with the aid of a mask method.

14. Parabolic trough collector (1000) comprising
- at least one parabolic mirror (3) having a sunlight reflecting surface (31) for concentrating sunlight in a focal line (32)of the parabolic mirror (31); and
- at least one heat receiver tube (1) according to claim 1 to claim 9 which is arranged in the focal line (32) of the parabolic mirror (3);
wherein
- the heat receiver tube (1) is arranged in the focal line (32) such that the first partial heat receiver tube surface (11) with the first solar absorptive coating (131) is at least partially located opposite to the sunlight reflecting surface (31) and the second partial heat receiver tube surface (12) with the emission radiation inhibiting coating (14) is at least partially averted to the sunlight reflecting surface (31).

15. Use of the parabolic trough collector (1000) according to claim 14 in a power plant for converting solar energy into electrical energy.

## Patentansprüche

1. Wärmeempfängerrohr (1) zum Absorbieren von Sonnenenergie und Übertragen der absorbierten Sonnenenergie auf ein Wärmeübertragungsfluid (2), das sich in einem Kernrohr (10) des Wärmeempfängerrohrs (1) befinden kann, wobei
- das Kernrohr (10) mindestens eine erste Kernrohrteilfläche (101), die zumindest mit einer Sonnenenergie absorbierenden ersten Beschichtung (131) zum Absorbieren einer ersten Absorptionsstrahlung eines bestimmten ersten Spektrums des Sonnenlichts überzogen ist, und mindestens eine zweite Kernrohrteilfläche (102) umfasst, die zumindest mit einer Sonnenenergie absorbierenden zweiten Beschichtung (132) zum Absorbieren einer zweiten Absorptionsstrahlung eines bestimmten zweiten Spektrums des Sonnenlichts überzogen ist,
- die Sonnenenergie absorbierende erste Beschichtung (131) eine erste Wärmeempfängerrohrteilfläche (11) des Wärmeempfängerrohrs (1) bildet,
**dadurch gekennzeichnet, dass**
- eine Emissionsstrahlung unterdrückende Beschichtung (14) zum Unterdrücken einer Emissivität für Infrarotstrahlung so auf der Sonnenenergie absorbierenden zweiten Beschichtung (132) aufgebracht ist, dass letztere zwischen der zweiten Kernrohrteilfläche (102) und der Emissionsstrahlung unterdrückenden Beschichtung (14) angeordnet ist, und
- die Emissionsstrahlung unterdrückende Beschichtung (14) eine zweite Wärmeempfängerrohrteilfläche (12) des Wärmeempfängerrohrs (1) bildet.

2. Wärmeempfängerrohr nach Anspruch 1, bei dem die Sonnenenergie absorbierende erste Beschichtung (131) und die Sonnenenergie absorbierende zweite Beschichtung (132) gemeinsam eine Sonnenenergie absorbierende Beschichtung (13) mit den gleichen physikalischen und chemischen Eigenschaften bilden.

3. Wärmeempfängerrohr nach Anspruch 1 oder 2, bei dem die erste Wärmeempfängerrohrteilfläche (11) und/ oder die zweite Wärmeempfängerrohrteilfläche (12) entlang einer Längsausrichtung (15) des Wärmeempfängerrohrs (1) ausgerichtet sind.

4. Wärmeempfängerrohr nach einem der vorhergehenden Ansprüche, bei dem die erste Wärmeempfängerrohrteilfläche (11) ein erstes Segment eines seitlichen Bereichs (16) des Wärmeempfängerrohrs (1) mit einem ersten Umfang (1611) umfasst, der aus dem Bereich zwischen 50° und 300° und vorzugsweise zwischen 60° und 210° ausgewählt ist.

5. Wärmeempfängerrohr nach einem der vorhergehenden Ansprüche, bei dem die zweite Wärmeempfängerrohrteilfläche (12) ein zweites Segment des seitlichen Bereichs (16) des Wärmeempfängerrohrs (1) mit einem zweiten Umfang (1621) umfasst, der aus dem Bereich zwischen 210° und 60° und vorzugsweise zwischen 180° und 90° ausgewählt ist.

6. Wärmeempfängerrohr nach einem der vorhergehenden Ansprüche, bei dem die Emissionsstrahlung unterdrückende Beschichtung (14) eine Emissivität für Infrarotstrahlung von weniger als 20% aufweist.

7. Wärmeempfängerrohr nach einem der vorhergehenden Ansprüche, bei dem die Emissionsstrahlung unterdrückende Beschichtung (14) ein Metall umfasst, das aus der Gruppe ausgewählt ist, die aus Aluminium, Kupfer, Gold und Molybdän besteht.

8. Wärmeempfängerrohr nach einem der vorhergehenden Ansprüche, bei dem die Emissionsstrahlung unterdrückende Beschichtung (14) eine Schichtdicke aufweist, die aus dem Bereich zwischen 100 nm und 800 nm und vorzugsweise zwischen 200 nm und 800 nm ausgewählt ist.

9. Wärmeempfängerrohr nach einem der vorhergehenden Ansprüche, bei dem mindestens eine der Wärmeempfängerrohrteilflächen (11, 12) einen durchgängigen Bereich bildet.

10. Verfahren zum Herstellen eines Wärmeempfängerrohrs nach einem der Ansprüche 1 bis 9, wobei das Verfahren folgende Schritte umfasst:
a) Versehen eines nicht überzogenen Kernrohrs (10) für ein Wärmeempfängerrohr (1) mit der ersten Kernrohrteilfläche (101) und der zweiten Kernrohrteilfläche (102),
b) Aufbringen einer Sonnenenergie absorbierenden ersten Beschichtung (131) an der ersten Kernrohrteilfläche (11) und Aufbringen einer Sonnenenergie absorbierenden zweiten Beschichtung (132) an der zweiten Kernrohrteilfläche (12) und
c) Aufbringen einer Emissionsstrahlung unterdrückenden Beschichtung (14) auf der Sonnenenergie absorbierenden zweiten Beschichtung (132), so dass die selektive zweite Sonnenenergiebeschichtung (132) zwischen der zweiten Kernrohrteilfläche (102) und der Emissionsstrahlung unterdrückenden Beschichtung (14) angeordnet ist.

11. Verfahren nach Anspruch 10, bei dem zum Aufbringen von zumindest einer der Sonnenenergie absorbierenden Beschichtungen (13, 131, 132) und/ oder zum Aufbringen der Emissionsstrahlung unterdrückenden Beschichtung (14) eine Dünnschichttechnik benutzt wird.

12. Verfahren nach Anspruch 11, bei der die Dünnschichttechnik aus der Gruppe ausgewählt ist, die aus Atomlagenabscheidung, chemischer und physikalischer Gasphasenabscheidung besteht.

13. Verfahren nach einem der Ansprüche 9 bis 12, bei dem das Aufbringen von zumindest einer der Sonnenenergie absorbierenden Beschichtungen (13, 131, 132) und/ oder das Aufbringen der Emissionsstrahlung unterdrückenden Beschichtung (14) mit Hilfe eines Maskenverfahrens durchgeführt wird.

14. Parabolrinnenkollektor (1000), der Folgendes umfasst:
- mindestens einen Parabolspiegel (3) mit einer Sonnenlicht reflektierenden Fläche (31) zum Bündeln von Sonnenlicht auf einer Brennlinie (32) des Parabolspiegels (31) und
- mindestens ein Wärmeempfängerrohr (1) nach Anspruch 1 bis 9, das auf der Brennlinie (32) des Parabolspiegels (3) angeordnet ist,
wobei
- das Wärmeempfängerrohr (1) so auf der Brennlinie (32) angeordnet ist, dass die erste Wärmeempfängerrohrteilfläche (11) mit der Sonnenenergie absorbierenden ersten Beschichtung (131) zumindest teilweise der Sonnenlicht reflektierenden Fläche (31) gegenüberliegt und die zweite Wärmeempfängerrohrteilfläche (12) mit der Emissionsstrahlung unterdrückenden Beschichtung (14) zumindest teilweise von der Sonnenlicht reflektierenden Fläche (31) abgewandt ist.

15. Verwendung des Parabolrinnenkollektors (1000) nach Anspruch 14 in einem Kraftwerk zum Umwandeln von Sonnenenergie in elektrische Energie.

## Revendications

1. Un tube récepteur thermique (1) destiné à l'absorption d'énergie solaire et au transfert de l'énergie solaire absorbée vers un fluide caloporteur (2) qui peut se trouver à l'intérieur d'un tube central (10) du tube récepteur thermique (1),
- le tube central (10) comprenant au moins une première surface de tube central partielle (101) recouverte par au moins un premier revêtement absorbant l'énergie solaire (131) destiné à l'absorption d'un premier rayonnement d'absorption d'un premier spectre donné de la lumière du soleil, et au moins une deuxième surface de tube central partielle (102) recouverte par au moins un deuxième revêtement absorbant l'énergie solaire (132) destiné à l'absorption d'un deuxième rayonnement d'absorption d'un deuxième spectre donné de la lumière du soleil,
- le premier revêtement absorbant l'énergie solaire (131) forme une première surface de tube récepteur thermique partielle (11) du tube récepteur thermique (1),
**caractérisé en ce que**
- un revêtement inhibiteur de rayonnement d'émission (14) destiné à inhiber une émissivité de rayonnement infrarouge est déposé sur le deuxième revêtement absorbant l'énergie solaire (132) de sorte que le deuxième revêtement absorbant l'énergie solaire (132) soit agencé entre la deuxième surface de tube central partielle (102) et le revêtement inhibiteur de rayonnement d'émission (14), et
- le revêtement inhibiteur de rayonnement d'émission (14) forme une deuxième surface de tube récepteur thermique partielle (12) du tube récepteur thermique (1).

2. Le tube récepteur thermique selon la revendication 1, dans lequel le premier revêtement absorbant l'énergie solaire (131) et le deuxième revêtement absorbant l'énergie solaire (132) forment un revêtement absorbant l'énergie solaire commun (13) avec des caractéristiques physiques et chimiques communes.

3. Le tube récepteur thermique selon la revendication 1 ou 2, dans lequel la première surface de tube récepteur thermique partielle (11) et/ou la deuxième surface de tube récepteur thermique partielle (12) sont alignées le long d'un alignement longitudinal (15) du tube récepteur thermique (1).

4. Le tube récepteur thermique selon l'une quelconque des revendications précédentes, dans lequel la première surface de tube récepteur thermique partielle (11) comprend un premier segment d'une zone latérale (16) du tube récepteur thermique (1) avec une première circonférence (1611) qui est sélectionnée dans la plage entre 50° et 300° et de préférence entre 60° et 210°.

5. Le tube récepteur thermique selon l'une quelconque des revendications précédentes, dans lequel la deuxième surface de tube récepteur thermique partielle (12) comprend un deuxième segment de la zone latérale (16) du tube récepteur thermique (1) avec une deuxième circonférence (1621) qui est sélectionnée dans la plage entre 210° et 60° et de préférence entre 180° et 90°.

6. Le tube récepteur thermique selon l'une quelconque des revendications précédentes, dans lequel le revêtement inhibiteur de rayonnement d'émission (14) comprend une émissivité de rayonnement infrarouge qui est inférieure à 20%.

7. Le tube récepteur thermique selon l'une quelconque des revendications précédentes, dans lequel le revêtement inhibiteur de rayonnement d'émission (14) comprend un métal qui est sélectionné dans le groupe se composant d'aluminium, de cuivre, d'argent ou et de molybdène.

8. Le tube récepteur thermique selon l'une quelconque des revendications précédentes, dans lequel le revêtement inhibiteur de rayonnement d'émission (14) comprend une épaisseur de couche qui est sélectionnée dans la plage entre 100 nm et 800 nm et de préférence entre 200 nm et 800 nm.

9. Le tube récepteur thermique selon l'une quelconque des revendications précédentes, dans lequel au moins une des surfaces de tube récepteur thermique partielles (11, 12) forme une zone contiguë.

10. Le procédé de fabrication d'un tube récepteur thermique selon l'une quelconque des revendications 1 à 9, le procédé comprenant les étapes suivantes :
a) la fourniture d'un tube central non couvert (10) pour un tube récepteur thermique (1) avec la première surface de tube central partielle (101) et la deuxième surface de tube central partielle (102),
b) la fixation d'un premier revêtement absorbant l'énergie solaire (131) sur la première surface de tube central partielle (11) et la fixation d'un deuxième revêtement absorbant l'énergie solaire (132) sur la deuxième surface de tube central partielle (12), et
c) la fixation d'un revêtement inhibiteur de rayonnement d'émission (14) sur le deuxième revêtement absorbant solaire (132) de sorte que le deuxième revêtement d'énergie solaire sélectif (132) soit agencé entre la deuxième surface de tube central partielle (102) et le revêtement inhibiteur de rayonnement d'émission (14).

11. Le procédé selon la revendication 10, dans lequel, pour la fixation d'au moins un des revêtements absorbants d'énergie solaire (13, 131, 132) et/ou pour la fixation du revêtement inhibiteur de rayonnement d'émission (14), une technique de dépôt de film mince est utilisée.

12. Le procédé selon la revendication 11, dans lequel la technique de dépôt de film mince est sélectionnée dans le groupe se composant de dépôt de couche atomique, dépôt en phase vapeur chimique et dépôt en phase vapeur physique.

13. Le procédé selon l'une quelconque des revendications 9 à 12, dans lequel la fixation d'au moins un des revêtements absorbants d'énergie solaire (13, 131, 132) et/ou la fixation du revêtement inhibiteur de rayonnement d'émission (14) sont exécutées au moyen d'un procédé de masque.

14. Un réflecteur cylindro-parabolique (1000) comprenant
- au moins un miroir parabolique (3) possédant une surface réfléchissant la lumière du soleil (31) destiné à la concentration de la lumière du soleil dans une ligne focale (32) du miroir parabolique (31), et
- au moins un tube récepteur thermique (1) selon les revendications 1 à 9 qui est agencé dans la ligne focale (32) du miroir parabolique (3),
- le tube récepteur thermique (1) étant agencé dans la ligne focale (32) de sorte que la première surface de tube récepteur thermique partielle (11) avec le premier revêtement absorbant solaire (131) soit au moins partiellement placée à l'opposé de la surface réfléchissant la lumière du soleil (31) et la deuxième surface de tube récepteur thermique partielle (12) avec le revêtement inhibiteur de rayonnement d'émission (14) soit
au moins partiellement opposée à la surface réfléchissant la lumière du soleil (31).

15. L'utilisation du réflecteur cylindro-parabolique (1000) selon la revendication 14 dans une centrale électrique pour la conversion d'une énergie solaire en énergie électrique.
